# EUROPÄISCHE PATENTANMELDUNG

(11) **EP 4 843 732 A1**
(43) Veröffentlichungstag der Anmeldung: **25.11.2026**
(21) Anmeldenummer: 26177308.9
(22) Anmeldetag: 07.05.2026
(51) Int. Cl.: B27C 5/06, B27M 1/08, B23Q 7/04

(54) **BEARBEITUNGSMASCHINE ZUR BEARBEITUNG VON WERKSTÜCKEN AUS HOLZ, HOLZÄHNLICHEN WERKSTOFFEN, KUNSTSTOFF UND DGL**

(30) Priorität: 23.05.2025 DE 102025001779
(71) Anmelder: Michael Weinig AG, 97941 Tauberbischofsheim (DE)
(72) Erfinder: GÖTZ, Daniel, 74731 Walldürn-Altheim (DE); EGERTER, Rolf, 74722 Buchen (DE)
(74) Vertreter: Patentanwälte Jackisch-Kohl und Kohl

(57) **Zusammenfassung**

Die Bearbeitungsmaschine dient zur Bearbeitung von Werkstücken (1) aus Holz, holzähnlichen Werkstoffen, Kunststoff und dgl. Sie weist wenigstens einen Zangentisch (3, 4) und mindestes ein Werkzeug (14) auf. Der Zangentisch (3, 4) hat Klemmbacken (32) zum Einspannen der Werkstücke (1). Er ist in x-Richtung längs einer Laufbahn (2) verfahrbar. Damit die Werkstücke (1), insbesondere auch breite Werkstücke, bei konstruktiv einfacher Ausbildung einwandfrei bearbeitet werden können, weist der Zangentisch (3, 4) in y-Richtung gegenüberliegend wenigstens einen Stütztisch (38, 39) mit wenigstens einer Auflage (50) für das Werkstück auf.

## Beschreibung

Die Erfindung betrifft eine Bearbeitungsmaschine zur Bearbeitung von Werkstücken aus Holz, holzähnlichen Werkstoffen, Kunststoff und dgl. nach dem Oberbegriff des Anspruches 1.

Solche Bearbeitungsmaschinen dienen dazu, Werkstücke an ihren Längsseiten zu bearbeiten, beispielsweise zu hobeln oder zu profilieren. Hierzu werden die Werkstücke auf einem Zangentisch mit dessen Klemmbacken eingespannt und längs der Laufbahn in x-Richtung verfahren. Dabei wird mit dem Werkzeug eine den Klemmbacken gegenüberliegende Längsseite des Werkstückes bearbeitet. Insbesondere breite Werkstücke lassen sich auf solchen Bearbeitungsmaschinen nicht oder nur sehr umständlich bearbeiten. Insbesondere lassen sich breitere Werkstücke im Zangentisch nicht stabil genug einspannen, um sie mit einer hinreichenden Genauigkeit bearbeiten zu können. Die Werkstücke können beim Einspannen oder bei der Bearbeitung verkippen (nach oben oder unten).

Der Erfindung liegt die Aufgabe zugrunde, die gattungsgemäße Bearbeitungsmaschine so auszubilden, dass die Werkstücke, insbesondere auch breite Werkstücke, bei konstruktiv einfacher Ausbildung einwandfrei bearbeitet werden können.

Diese Aufgabe wird bei der gattungsgemäßen Bearbeitungsmaschine erfindungsgemäß mit den kennzeichnenden Merkmalen des Anspruches 1 gelöst.

Der dem Zangentisch in y-Richtung gegenüberliegende Stütztisch erlaubt es, auch breitere Werkstücke präzise und stabil durch die Bearbeitungsstation zu fahren bzw. zu führen und zu halten, dass sie mit ausreichender Genauigkeit bearbeitet werden können. Der Stütztisch gewährleistet bei der Bearbeitung die exakte Lage und Position des Werkstückes zum Werkzeug und verhindert ein Wegkippen des Werkstückes während der Bearbeitung. Das Werkstück wird auf dem Zangentisch mit den Klemmbacken eingespannt und im Bereich gegenüber den Klemmbacken des Zangentisches durch die Auflage des Stütztisches sicher abgestützt, so dass das Werkzeug das Werkstück an der entsprechenden Längsseite sauber bearbeiten kann. Das Werkstück wird somit an einer Seite auf dem Zangentisch mit den Klemmbacken eingespannt und an seiner anderen Seite nur abgestützt, ohne dass es auf dem Stütztisch eingespannt werden muss.

Vorteilhaft kann der Zangentisch in y-Richtung gegenüber dem Stütztisch verstellt werden, so dass die Position des Zangentisches sehr einfach an unterschiedlich breite Werkstücke angepasst werden kann. Der Zangentisch wird in y-Richtung so verstellt, dass er das Werkstück an der entsprechenden Längsseite spannen kann.

Eine konstruktiv einfache und zuverlässige Verstellung des Zangentisches ist vorteilhaft dann gegeben, wenn der Zangentisch eine Verstelleinheit aufweist, die in x-Richtung der Laufbahn verstellbar ist. Der Zangentisch wird zur Längsbearbeitung des Werkstückes mittels der Verstelleinheit in x-Richtung verschoben.

Vorteilhaft ist es, wenn die Verstelleinheit eine in y-Richtung verlaufende Führung für den Zangentisch aufweist. Die in y-Richtung verlaufende Führung bietet die Möglichkeit, den Zangentisch in y-Richtung zur Anpassung an die entsprechende Breite des Werkstückes zu verstellen.

Eine zuverlässige Abstützung des Werkstückes wird in vorteilhafter Weise erreicht, wenn der Zangentisch eine Auflagefläche für das Werkstück aufweist.

Die Auflagefläche des Zangentisches ist vorteilhaft in der Höhe (z-Richtung) verstellbar.

Es ist in vorteilhafter Weise möglich, auf der Auflagefläche des Zangentisches wenigstens einen in x-Richtung verlaufenden Anschlag für das Werkstück vorzusehen. Dadurch kann das Werkstück einfach gegenüber dem Zangentisch positioniert und durch dessen Klemmbacken sicher eingespannt werden. Das Werkstück liegt an diesem Anschlag mit seiner einen Längsseite an.

Die Bearbeitungsmaschine ist vorteilhaft mit wenigstens einem Druckelement versehen, das zur Auflage auf dem Werkstück vorgesehen ist. Das Druckelement drückt das Werkstück gegen die Auflage des Stütztisches, was zur sicheren Abstützung des Werkstückes beiträgt.

Vorteilhaft ist es, wenn das Druckelement am Stütztisch angeordnet ist, der wenigstens eine in z-Richtung verlaufende Führung für einen Druckelement-Träger aufweist. Mit ihm kann das Druckelement in Höhenrichtung (z-Richtung) verstellt werden, so dass auf diese Weise eine einfache Anpassung an die Dicke des Werkstückes möglich ist.

Besonders bevorzugt ist das Druckelement eine Druckrolle, die um eine in y-Richtung verlaufende Achse frei drehbar ist. Dadurch lässt sich das Werkstück unter der Druckrolle einfach durchführen, auch wenn die Druckrolle einen entsprechenden Druck auf das Werkstück in dessen Dickenrichtung ausübt.

Vorteilhaft ist das Druckelement am freien Ende des Druckelement-Trägers angeordnet. Dadurch lässt sich das Druckelement sehr einfach so positionieren, dass es unabhängig von der Dicke des Werkstückes auf dessen Oberseite unter Druck aufliegt.

Bei einer bevorzugten Ausführungsform liegen dem Zangentisch in y-Richtung zwei Stütztische gegenüber, die in x-Richtung Abstand voneinander haben. Mit den beiden Stütztischen lässt sich das Werkstück unmittelbar vor und nach dem Bearbeitungswerkzeug zuverlässig abstützen, führen und halten, während es mit dem Werkzeug bearbeitet wird. Die Stütztische sind bei der Bearbeitung relativ zu dem Bearbeitungswerkzeug in x-Richtung so positioniert, dass das Werkzeug kollisionsfrei zwischen diese gestellt werden und das Werkstück bearbeiten kann. Zur Bearbeitung wird das in dem Zangentisch eingespannte Werkstück an dem Bearbeitungswerkzeug vorbeigeführt, wobei es auf der Auflage der Stütztische aufliegt und mit den Druckelementen in Richtung auf die Auflage belastet ist.

Bei einer konstruktiv einfachen Ausbildung haben die beiden Stütztische einen gemeinsamen Antrieb zum Verfahren in x-Richtung.

Es ist aber auch möglich, dass für die beiden Stütztische jeweils ein Antrieb zum Verfahren in x-Richtung vorgesehen ist. Eine solche Ausbildung hat insbesondere den Vorteil, dass der Abstand der Stütztische in x-Richtung im Bedarfsfalle sehr einfach variiert werden kann.

Wenn die beiden Stütztische den gemeinsamen Antrieb haben, ist es von Vorteil, wenn die beiden Stütztische durch ein in x-Richtung längenveränderliches Kopplungselement miteinander verbunden sind. Über dieses Kopplungselement kann der Abstand der Stütztische in x-Richtung voneinander eingestellt werden.

Damit das Werkzeug das Werkstück an seinen Längsseiten bearbeiten kann, ist es in vorteilhafter Weise in y- und in z-Richtung verstellbar. Durch diese Verstellbarkeit in den beiden senkrecht zueinander liegenden Richtungen lässt sich das Werkzeug an die gewünschte Bearbeitungsstelle am Werkstück einstellen.

Bevorzugt ist das Werkzeug an einem Bearbeitungsportal verstellbar gelagert. Am Bearbeitungsportal lassen sich die entsprechenden Führungen und Verstellantriebe für das Werkzeug raumsparend anbringen. Das Bearbeitungsportal überspannt die Laufbahn für den Zangentisch und den Stütz-tisch. Die Laufbahn erstreckt sich vorteilhaft durch das Bearbeitungsportal hindurch. Mit der Zangeneinheit lässt sich das zu bearbeitende Werkstück unter das Bearbeitungsportal fahren, wobei während der Fahrt des Werkstückes in x-Richtung das Werkzeug die entsprechende Bearbeitung am Werkstück vornimmt.

In vorteilhafter Weise wird das Werkzeug in einen Bauraum zwischen den beiden Stütztischen gefahren, die diesen Bauraum in x-Richtung begrenzen. Wenn die beiden Stütztische in x-Richtung gegeneinander verstellbar sind, kann der Abstand zwischen den beiden Stütztischen an die Größe des einzusetzenden Werkzeuges einfach angepasst werden. Es ist vorteilhaft, wenn die Stütztische in x-Richtung möglichst nahe vor und nach das Bearbeitungswerkzeug gestellt sind. Damit ist eine optimale Führung des Werkstücks gewährleistet und es kann mit hoher Genauigkeit bearbeitet werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand mehrerer Ausführungsbeispiele näher erläutert. Es zeigen:
- Fig. 1: in perspektivischer Darstellung eine erste Ausführungsform einer erfindungsgemäßen Bearbeitungsmaschine,
- Fig. 2: in schematischer Darstellung und in einem Querschnitt zwischen zwei Vorschubeinheiten die erfindungsgemäße Bearbeitungsmaschine gemäß Fig. 1,
- Fig. 3: in vergrößerter Darstellung einer Draufsicht auf eine rechte Vorschubeinheit der erfindungsgemäßen Bearbeitungsmaschine,
- Fig. 4: in Seitenansicht die rechte Vorschubeinheit gemäß Fig.3,
- Fig. 5: zwei voneinander getrennte Stütztische der Bearbeitungsmaschine, die getrennt positionierbar sind,
- Fig. 6: zwei Stütztische der Bearbeitungsmaschine, die als Einheit fest miteinander gekoppelt sind.

Mit der Bearbeitungsmaschine werden Werkstücke 1 aus Holz, holzähnlichen Werkstoffen, Kunststoff und dergleichen bearbeitet. Die Werkstücke 1 haben viereckigen, vorzugsweise rechteckigen Querschnitt. Je nach Art der Bearbeitungsmaschine können die Werkstücke 1 an sämtlichen Außenseiten bearbeitet werden.

Die Bearbeitungsmaschine hat eine Laufbahn 2, die sich in x-Richtung erstreckt und längs der zwei Vorschubeinheiten V1, V2 in x-Richtung verfahrbar sind.

Die Laufbahn 2 wird von einem Bearbeitungsportal 5 überspannt, das zwei Stützen 6, 7 aufweist, die mit Abstand neben der Laufbahn 2 auf dem Untergrund aufstehen und durch einen Querträger 8 miteinander verbunden sind. Er erstreckt sich mit Abstand oberhalb der Laufbahn 2 und weist eine Führung 9 auf, die sich in y-Richtung erstreckt. Die Führung 9 ist eine Linearführung, längs der in y-Richtung ein Werkzeugträger 10 verfahrbar ist.

Er weist eine in z-Richtung verlaufende Führung 11 für einen Schlitten 12 auf, der eine Werkzeugspindel 13 trägt, mit der ein Werkzeug 14 drehbar angetrieben wird. Es ist um eine in z-Richtung liegende Achse drehbar. Mit dem Schlitten 12 kann das Werkzeug 14 in z-Richtung relativ zum zu bearbeitenden Werkstück 1 verstellt werden. Mit Hilfe des Werkzeugträgers 10 kann das Werkzeug 14 zudem in y-Richtung verstellt werden.

Das Werkzeug 14 kann jeder Art sein, mit dem die Werkstücke 1 bearbeitet werden können. Es kann beispielsweise ein Fräser sein, der von einer Absaughaube umgeben sein kann. Das Werkzeug kann beispielsweise auch ein Bohr- oder Sägeaggregat u.a. sein.

Die längs der Laufbahn 2 in x-Richtung verfahrbaren Vorschubeinheiten V1, V2 sind jeweils als Zangentische 3, 4 ausgebildet, die unabhängig voneinander verfahrbar sind. Jedem Zangentisch 3, 4 ist ein entsprechender Antrieb 15, 16 zugeordnet.

Die Laufbahn 2 hat einen in x-Richtung sich erstreckenden Träger 17, der zwei parallel zueinander liegende Außenseiten 18, 19 aufweist, die sich ebenfalls in x-Richtung erstrecken und jeweils eine Führung 20, 21 für die Zangentische 3, 4 aufweisen. Die Führungen 20, 21 werden beispielhaft durch zwei mit Abstand zueinander liegende Schienen gebildet, längs derer die Zangentische 3, 4 verfahren werden können.

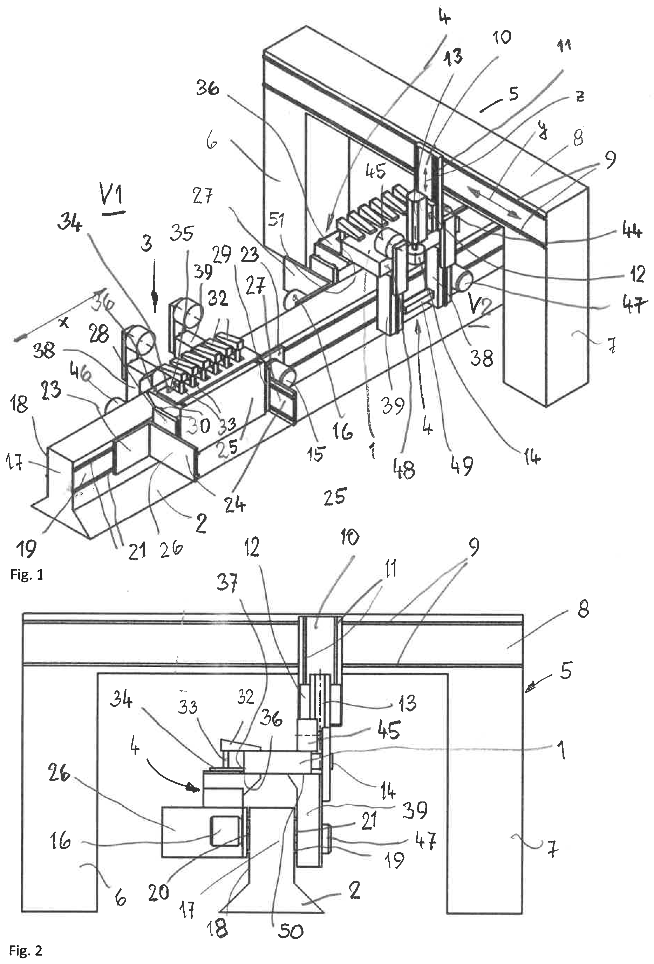

Wie sich aus Fig. 1 ergibt, sind die beiden Vorschubeinheiten V1, V2 spiegelverkehrt zueinander auf beiden Seiten der Laufbahn 2 angeordnet.

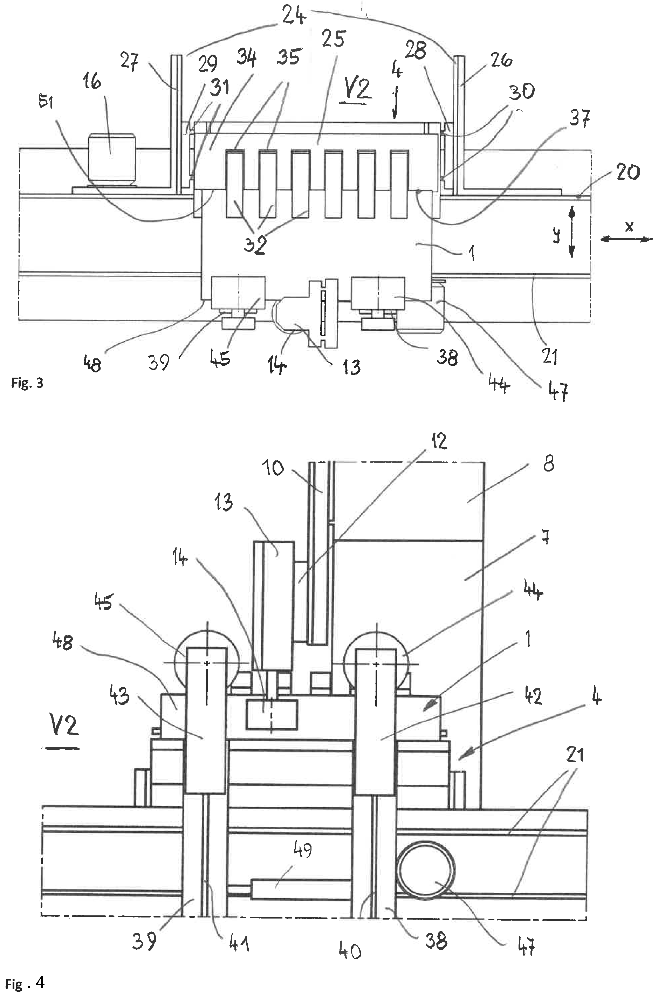

Die Zangentische 3, 4 bestehen aus einem Klemmbackenträger 25 und einer Verstelleinheit 24, die in x-Richtung verfahrbar ist und über die sich der Klemmbackenträger 25 und damit der Zangentisch 3, 4 in y- und z-Richtung verstellen lässt. Die Verstelleinheit 24 hat zwei beidseitig des Klemmbackenträgers 25 angeordnete Schlitten 23, die längs der Führung 20, 21 in
x-Richtung verfahrbar sind. Jeder Schlitten 23 hat eine senkrecht davon abstehende Führung 26, 27, die sich in y-Richtung erstreckt und längs derer der Klemmbackenträger 25 in y-Richtung verstellbar ist. Die Führungen 26, 27 werden beispielhaft durch jeweils zwei parallel zueinander liegende Schienen gebildet, längs derer Schlitten 28, 29 verfahrbar sind. Die Schlitten 28, 29 haben wiederum jeweils eine Führung 30, 31 (Fig. 1 und 3), bestehend aus jeweils zwei parallel zueinander liegenden Schienen, die sich in vertikaler z-Richtung erstrecken. Die Schlitten 28, 29 bilden einen Kreuz-support für den Klemmbackenträger 25. Mit Hilfe der Schlitten 28, 29 kann der Klemmbackenträger 25 quer zur Führung 20, 21 in y-Richtung und in z-Richtung verstellt werden.

Anstelle der zwei Schlitten 23 kann auch nur ein Schlitten 23 vorgesehen sein.

Der Klemmbackenträger 25 ist mit Klemmbacken 32 versehen, die in x-Richtung hintereinander angeordnet sind und mit denen das Werkstück 1 bei dessen Bearbeitung festgeklemmt werden kann.

Die Klemmbacken 32 sind am oberen Ende von Stellstangen 33 befestigt. Die Stellstangen 33 ragen durch einen Anlagerechen 34, der entsprechende Durchtrittsöffnungen 35 für die Stellstangen 33 aufweist.

Die Klemmbacken 32 erstrecken sich vom oberen Ende der Stellstangen 33 aus in y-Richtung. Die Klemmbacken 32 klemmen die Werkstücke 1 von oben, das in noch zu beschreibender Weise auf einer Auflage 36 des Klemmbackenträgers 25 aufliegt.

Zur Ausrichtung der Werkstückes 1 in y-Richtung dient eine Anlagefläche 37 des Anlagerechens 34 (Fig. 3). Die Anlagefläche 37 erstreckt sich in x-Richtung. Die Durchtrittsöffnungen 35 für die Stellstangen 33 der Klemmbacken 32 münden in die Anlagefläche 37 (Fig. 3).

Die Klemmbacken 32 werden mit Hilfe der Stellstangen 33 in z-Richtung verstellt. Hierbei können die Klemmbacken 32 gemeinsam in der Höhe verstellt werden. Grundsätzlich ist es auch möglich, die Klemmbacken 32 unabhängig voneinander in der Höhe (z-Richtung) zu verstellen.

Je nach Breite des Werkstückes 1 ist es notwendig, den Klemmbackenträger 25 in y-Richtung einzustellen. Er kann über die Schlitten 28, 29 längs der in y-Richtung verlaufenden Führungen 26, 27 in gewünschtem Maße verstellt werden.

Auf jeder Seite der Laufbahn 2 ist jeweils ein Zangentisch 3, 4 angeordnet (Fig. 1). Auf der jeweils gegenüberliegenden Seite der Laufbahn 2 befinden sich zwei Stütztische 38, 39, die in x-Richtung mit Hilfe eines Antriebes 46, 47 längs der Führungen 20, 21 verfahren werden können und der jeweiligen gegenüberliegenden Vorschubeinheit V1, V2 zugeordnet sind. D.h. jeweils die eine Vorschubeinheit V1, V2 und die der anderen Vorschubeinheit V1, V2 zugeordneten gegenüberliegenden Stütztische 38, 39 liegen auf der gleichen Seite der Laufbahn 2 und sind auf den gleichen Führungen 20, 21 verfahrbar.

Jeder Stütztisch 38, 39 hat eine in z-Richtung verlaufende Führung 40, 41 (Fig. 4), längs der ein Druckrollenträger 42, 43 verstellbar ist. Er trägt an seiner dem gegenüberliegendem Zangentisch 3,4 zugewandten Seite ein Druckelement, das vorzugsweise eine Druckrolle 44, 45 ist, die um eine in y-Richtung liegende Achse frei drehbar ist.

Zur Höhenverstellung der Druckrollenträger 42, 43 ist ein weiterer (nicht dargestellter) Antrieb vorgesehen, mit dem die Druckrollen 44, 45 in Bezug zur Werkstückhöhe eingestellt und gegen die Oberseite des Werkstückes 1 gedrückt werden können.

Die beiden Stütztische 38, 39 haben einen solchen Abstand in x-Richtung voneinander, dass zwischen ihnen das Werkzeug 14 an das Werkstück 1 herangeführt werden kann, um es bei seinem Durchlauf durch die Bearbeitungsmaschine entsprechend zu bearbeiten. Die beiden Stütztische 38, 39 begrenzen in x-Richtung einen Bauraum für das Werkzeug 14.

Da das Werkzeug 14 in y- und in z-Richtung verstellbar ist, lässt sich das Werkzeug 14 genau an die zutreffende Bearbeitungsposition verstellen, um das Werkstück 1 in der erforderlichen Weise zu bearbeiten.

Im dargestellten Ausführungsbeispiel wird mit dem Werkzeug 14 die eine in x-Richtung sich erstreckende Längsseite 48 des Werkstückes 1 bearbeitet.

Die Fig. 2 bis 6 zeigen jeweils die Vorschubeinheit V₂, die gleich ausgebildet ist wie die Vorschubeinheit V1. Daher gelten die Ausführungen zur Vorschubeinheit V2 in gleicher Weise für die Vorschubeinheit V1.

Wie Fig. 4 zeigt, sind die beiden Stütztische 38, 39 miteinander gekoppelt. Als Kopplungselement ist vorteilhaft ein Pneumatikzylinder 49 vorgesehen, der beispielhaft nahe am unteren Ende der beiden Stütztische 38, 39 angeordnet ist. Infolge des Pneumatikzylinders 49 als Koppelungselement ist nur der eine Antrieb 47 notwendig, um die beiden Stütztische 38, 39 in x-Richtung längs der Führung 21 zu verstellen. Das Kopplungselement 49 ist in
x-Richtung längenverstellbar, so dass der Abstand zwischen den beiden Stütztischen 38, 39 verändert werden kann, um unterschiedlich breite Werkzeuge 14 einsetzen zu können.

Die Stütztische 38, 39 sind am oberen Ende in Richtung auf den gegenüberliegenden Zangentisch 3,4 verbreitert ausgebildet. Dieser verbreiterte Bereich dient als eine Auflagefläche 50 für das Werkstück 1. Das zu bearbeitende Werkstück 1 liegt beim Durchlauf durch die Maschine mit seinem Randbereich auf der Auflagefläche 50 der beiden Stütztische 38, 39 auf. Die Auflagefläche 50 der Stütztische 38, 39 liegt auf gleicher Höhe wie die Auflagefläche 36 des gegenüberliegenden Zangentisches 3,4 (Fig. 2).

Da der Klemmbackenträger 25 in y-Richtung relativ zur Laufbahn 2 und zu den gegenüberliegenden Tischen 38, 39 verstellt werden kann, kann der Abstand zwischen dem Klemmbackenträger 25 und den Stütztischen 38, 39 an die Breite des jeweiligen Werkstückes 1 einfach angepasst werden. Da die Klemmbacken 32 Bestandteil des Klemmbackenträgers 25 sind, werden diese bei der Verstellung des Klemmbackenträgers 25 ebenfalls in y-Richtung gegenüber den Stütztischen 38, 39 verstellt.

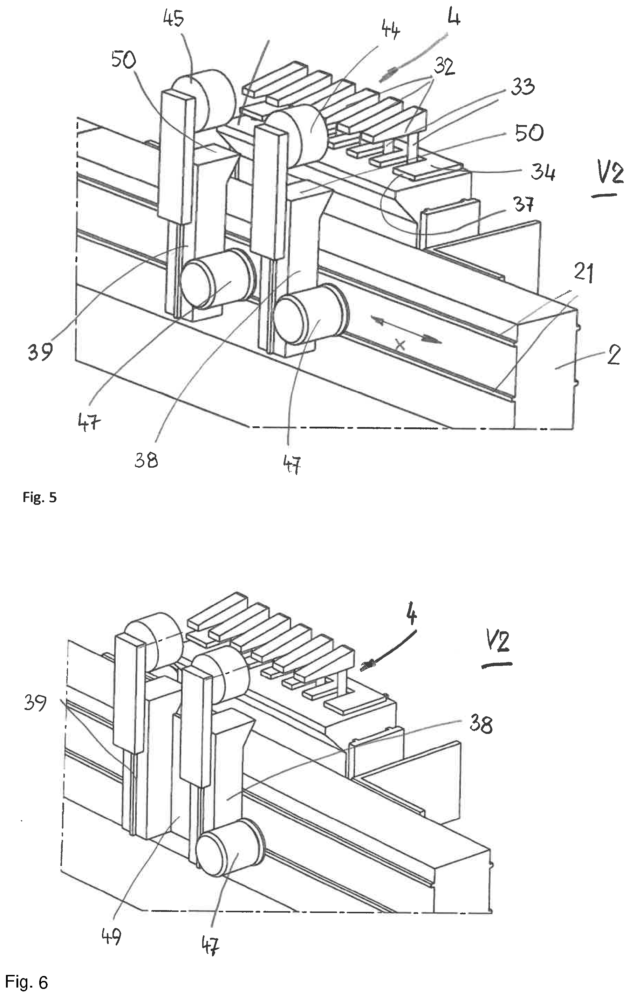

Fig. 5 zeigt eine Ausführungsform einer Vorschubeinheit V1, V2, bei der die beiden Stütztische 38, 39 durch jeweils einen Antrieb 47 unabhängig voneinander in x-Richtung längs der Führung 21 der Laufbahn 2 verfahren werden können. Dadurch kann der Abstand zwischen den Stütztischen 38, 39 und damit auch der Abstand zwischen den Druckrollen 44, 45 verändert werden. Dadurch lassen sich die Stützrollen 44, 45 immer so einstellen, dass genügend Freiraum für das Bearbeitungswerkzeug 14 und die vorgesehene Bearbeitungsposition an dem Werkstück 1 vorhanden ist, aber dieses während der Bearbeitung durch das Werkzeug 14 dennoch zuverlässig gehalten wird.

Fig. 6 zeigt die Möglichkeit, die beiden Stütztische 38, 39 fest miteinander zu koppeln. In diesem Falle ist das Kopplungselement 49 starr ausgebildet. Zum Antrieb der beiden Stütztische 38, 39 ist nur der eine Antrieb 47 erforderlich. Der Abstand zwischen den beiden Stütztischen 38, 39 in x-Richtung kann nicht geändert werden.

Im Übrigen sind die Vorschubeinheiten V1, V2 gleich ausgebildet wie bei den vorigen Ausführungsformen.

Da die beiden Zangentische 3, 4 spiegelverkehrt an der Laufbahn 2 der Bearbeitungsmaschine vorgesehen sind, werden beim Durchlauf der Werkstücke 1 deren Längsseiten 48, 51 nacheinander durch das Werkzeug 14 bearbeitet. Zunächst wird bei der Anordnung gemäß Fig. 1 mit dem Werkzeug 14 die Längsseite 48 des im Zangentisch 4 eingespannten Werkstückes 1 bei dessen Durchlauf bearbeitet. Der Zangentisch 4 wird durch den Antrieb 16 in x-Richtung längs der Laufbahn 2 verfahren. Die Stütztische 38, 39 sind in die richtige Position verfahren, so dass das Werkzeug 14 zwischen diesen hindurchfahren kann, und bleiben während der Bearbeitung in dieser Position stehen. Die Druckrollen 44, 45 der Stütztische 38, 39 üben einen Druck auf das Werkstück 1 in z-Richtung aus, wodurch es zuverlässig gegen die Auflageflächen 50 der beiden Stütztische 38, 39 gedrückt wird. Der Zangentisch 4 wird mit dem eingespannten Werkstück 1 in x-Richtung gegenüber den Stütztischen 38, 39 verfahren, so dass das Werkzeug 14 das Werkstück 1 über die gesamte Länge seiner Längsseite 48 bearbeiten kann.

Zur Bearbeitung der anderen Längsseite 51 muss das Werkstück an den anderen Zangentisch 3 übergeben werden. Dieser befindet sich in einer Aufnahmeposition, in der die Klemmbacken 32 des Klemmbackenträgers 25 hochgefahren sind. Vorteilhaft ist der Klemmbackenträger 25 als Ganzes etwas nach unten gestellt, so dass die Auflage 36 geringfügig abgesenkt ist. Die Stütztische 38, 39 sind durch den Antrieb 46 so weit in x-Richtung in eine Übergabeposition verfahren, dass der Zangentisch 4 in eine Position gegenüber dem Zangentisch 3 gelangen kann. Die Klemmbacken 32 des Zangentisches 3 sind so weit hochgefahren und die Auflage 36 so weit abgesenkt, dass das Werkstück 1 mit seiner bereits bearbeiteten Längsseite 48 berührungslos zwischen die Klemmbacken 32 und die Auflage 36 des Zangentisches 3 gefahren werden kann. Anschließend werden der Klemmbackenträger 25 mit der Auflage 36 hochgefahren, die Klemmbacken 32
des Zangentisches 3 abgesenkt und das Werkstück 1 festgeklemmt. Anschließend werden die Klemmbacken 32 des Klemmbackenträgers 25 des Zangentisches 4 hochgefahren sowie dessen Auflage 36 abgesenkt und das Werkstück 1 an dieser Seite freigegeben. Der Zangentisch 4 wird in x-Richtung in eine Stellung hinter dem Bearbeitungsportal 5 gefahren. Die Laufbahn 2 erstreckt sich über das Bearbeitungsportal 5 hinaus, was in Fig. 1
allerdings nicht dargestellt ist.

Auch die Stütztische 38, 39 des Zangentisches 4 werden längs der Laufbahn 2 hinter das Bearbeitungsportal 5, also aus dem Bearbeitungsbereich gefahren.

Die dem Zangentisch 3 zugeordneten Stütztische 38, 39 werden entlang der Führungen 20 unter das Bearbeitungsportal 5 verfahren und positioniert. Die Stütztische 38, 39 bleiben für die nachfolgende Bearbeitung des Werkstückes 1 in dieser Position stehen.

Das Werkzeug 14, das vor dem Wegfahren der dem Zangentisch 4 zugeordneten Stütztische 38, 39 in z-Richtung mit Hilfe des Schlittens 12 hochgefahren worden ist, wird nunmehr längs der Führung 9 in y-Richtung so weit verstellt, bis es sich in Höhe der noch unbearbeiteten Längsseite 51 des Werkstückes 1 befindet. Die Werkzeugspindel 13 wird dann in z-Richtung so weit abgesenkt, dass sich das Werkzeug 14 im Bereich zwischen den beiden Stütztischen 38, 39 befindet.

Zur Bearbeitung der Längsseite 51 des im Zangentisch 3 eingespannten Werkstückes 1 wird der Zangentisch 3 in x-Richtung gegenüber den Stütztischen 38, 39 und dem Werkzeug 14 so weit verfahren, dass das Werkzeug 14 die Längsseite 51 über die Länge vollständig bearbeiten kann. Hierbei wird das Werkstück 1 die feststehenden Stütztische 38, 39 geführt, wobei es mit seiner dem Zangentisch 3 überstehenden Seite auf deren Auflageflächen 50 aufliegt. Die frei drehbaren Druckrollen 44, 45 liegen unter Druck auf dem Werkstück 1 auf und drücken es auf die Auflageflächen 50, womit es während dessen Bewegung in x-Richtung sicher gehalten ist.

Während am Bearbeitungsportal 5 die Längsseite 51 des Werkstückes 1 bearbeitet wird, wird bevorzugt parallel hierzu das nächste zu bearbeitende Werkstück 1 in den Zangentisch 4 eingespannt. Sobald die Werkstücklängsseite 51 fertig bearbeitet wird, wird der Zangentisch 3 zusammen mit den gegenüberliegenden Stütztischen 38, 39 in x-Richtung zurückgefahren, während vorteilhaft gleichzeitig der Zangentisch 4 mit den gegenüberliegenden Stütztischen 38, 39 in den Bearbeitungsbereich des Werkzeuges 14 gefahren wird. Dann beginnt die Bearbeitung des Werkstückes 1 in der beschriebenen Weise.

Während das neue Werkstück 1 bearbeitet wird, wird das fertig bearbeitete Werkstück 1 dem zurückgefahrenen Zangentisch 3 entnommen, so dass er zur Übernahme des Werkstückes 1 bereit ist, das im Bereich des Bearbeitungsportales 5 bearbeitet wird.

Die Druckrollen 44, 45 sind in axialer Richtung so gegenüber dem Werkstück vorgesehen, dass sie über die Längsseite des Werkstückes 1 überstehen (Fig. 2). Sie sind ausreichend breit, so dass sie über den größeren Teil ihrer Breite auf der Oberseite des Werkstückes 1 aufliegen.

Die Auflageflächen 36, 50 der Zangentische 3, 4 und der Stütztische 38, 39 sind ausreichend breit in y-Richtung, so dass die Werkstücke 1 sicher bei der Bearbeitung gespannt und abgestützt werden.

Die beschriebene Bearbeitungsmaschine ist insbesondere für Werkstücke mit größerer Breite und Dicke geeignet. Da die Zangentische 3, 4 in y-Richtung gegenüber den Stütztischen 38, 39 verstellt werden können, kann die Position der Zangentische 3, 4 einfach an die Breite der zu bearbeitenden Werkstücke 1 angepasst werden. Die Klemmbacken 32 und die Druckrollen 44, 45 sind in z-Richtung verstellbar, so dass diese auch an unterschiedlich dicke Werkstücke 1 leicht angepasst werden können.

Bei der Bearbeitung schmalerer Teile wie beispielsweise üblichen Fensterkanteln ist eine dem Zangentisch 3, 4 gegenüberliegende Abstützung bei deren Bearbeitung nicht erforderlich und die Stütztische 38, 39 sind in diesem Fall aus dem Bearbeitungsbereich weggestellt.

## Patentansprüche

1. Bearbeitungsmaschine zur Bearbeitung von Werkstücken (1) aus Holz, holzähnlichen Werkstoffen, Kunststoff und dgl., mit wenigstens einem Zangentisch (3, 4), der Klemmbacken (32) zum Einspannen der Werkstücke (1) aufweist und in x-Richtung längs einer Laufbahn (2) verfahrbar ist, und mit mindestens einem Werkzeug (14),
**dadurch gekennzeichnet, dass** dem Zangentisch (3, 4) in y-Richtung gegenüberliegend wenigstens ein Stütztisch (38,39) mit wenigstens einer Auflage (50) für das Werkstück (1) vorgesehen ist.

2. Bearbeitungsmaschine nach Anspruch 1,
**dadurch gekennzeichnet, dass** der Abstand zwischen dem Zangentisch (3, 4) und dem Stütztisch (38, 39) in y-Richtung einstellbar ist.

3. Bearbeitungsmaschine nach Anspruch 1 oder 2,
**dadurch gekennzeichnet, dass** der Zangentisch (3, 4) eine Verstelleinheit (24) aufweist, die in x-Richtung der Laufbahn (2) verstellbar ist.

4. Bearbeitungsmaschine nach einem der Ansprüche 1 bis 3,
**dadurch gekennzeichnet, dass** die Verstelleinheit (24) eine in y-Richtung verlaufende Führung (26, 27) für den Zangentisch (3, 4) aufweist.

5. Bearbeitungsmaschine nach einem der Ansprüche 1 bis 4,
**dadurch gekennzeichnet, dass** der Zangentisch (3, 4) eine Auflagefläche (36) für das Werkstück (1) aufweist.

6. Bearbeitungsmaschine nach Anspruch 5,
**dadurch gekennzeichnet, dass** die Auflagefläche (36) in der Höhe (z-Richtung) verstellbar ist.

7. Bearbeitungsmaschine nach Anspruch 5 oder 6,
**dadurch gekennzeichnet, dass** auf der Auflagefläche (36) des Zangentisches (38, 39) wenigstens ein in x-Richtung verlaufender Anschlag (34) für das Werkstück (1) vorgesehen ist.

8. Bearbeitungsmaschine nach einem der Ansprüche 1 bis 7,
**dadurch gekennzeichnet, dass** sie wenigstens ein Druckelement (44, 45) zur Auflage auf dem Werkstück (1) aufweist.

9. Bearbeitungsmaschine nach einem der Ansprüche 1 bis 8,
**dadurch gekennzeichnet, dass** das Druckelement (44, 45) am Stütztisch (38, 39) angeordnet ist, der wenigstens eine in z-Richtung verlaufende Führung (40, 41) für einen Druckelement-Träger (42, 43) aufweist.

10. Bearbeitungsmaschine nach Anspruch 8 oder 9,
**dadurch gekennzeichnet, dass** das Druckelement (44, 45) eine Druckrolle ist, die um eine in y-Richtung verlaufende Achse frei drehbar ist.

11. Bearbeitungsmaschine nach Anspruch 9 oder 10,
**dadurch gekennzeichnet, dass** das Druckelement (44, 45) am freien Ende des Druckelement-Trägers (42, 43) angeordnet ist.

12. Bearbeitungsmaschine nach einem der Ansprüche 1 bis 11,
**dadurch gekennzeichnet, dass** dem Zangentisch (3, 4) in y-Richtung zwei Stütztische (38, 39) gegenüberliegen, die in x-Richtung Abstand voneinander haben.

13. Bearbeitungsmaschine nach Anspruch 12,
**dadurch gekennzeichnet, dass** die beiden Stütztische (38, 39) einen gemeinsamen Antrieb (46, 47) zum Verfahren in x-Richtung haben.

14. Bearbeitungsmaschine nach Anspruch 13,
**dadurch gekennzeichnet, dass** die beiden Stütztische (38, 39) jeweils einen Antrieb (46, 47) zum Verfahren in x-Richtung haben.

15. Bearbeitungsmaschine nach einem der Ansprüche 1 bis 14,
**dadurch gekennzeichnet, dass** die beiden Stütztische (38, 39) durch ein in x-Richtung längenveränderliches Kopplungselement (49) miteinander verbunden sind.

16. Bearbeitungsmaschine nach einem der Ansprüche 1 bis 15,
**dadurch gekennzeichnet, dass** das Werkzeug (14) in y- und in z-Richtung verstellbar ist.

17. Bearbeitungsmaschine nach einem der Ansprüche 1 bis 16,
**dadurch gekennzeichnet, dass** das Werkzeug (14) an einem Bearbeitungsportal (5) verstellbar gelagert ist.

18. Bearbeitungsmaschine nach einem der Ansprüche 1 bis 17,
**dadurch gekennzeichnet, dass** die beiden Stütztische (38, 39) einen Bauraum für das Werkzeug (14) in x-Richtung begrenzen.
